# EUROPEAN PATENT APPLICATION

(11) **EP 2 641 953 A1**
(43) Date of publication of application: **25.09.2013**
(21) Application number: 11840738.6
(22) Date of filing: 16.11.2011
(51) Int. Cl.: C09J 201/00, C09J 5/06, C09J 11/08, F16D 69/04

(54) **ADHESIVE AGENT, ADHESION METHOD, AND PROCESS FOR PRODUCTION OF ADHERED MATERIAL**

(30) Priority: 19.11.2010 JP 2010259553
(71) Applicant: Akebono Brake Industry Co., Ltd., Tokyo 103-8534 (JP)
(72) Inventor: HASHIMOTO Akinori, Chuo-ku Tokyo 103-8534 (JP); KATO Masanori, Chuo-ku Tokyo 103-8534 (JP)
(74) Representative: Grünecker, Kinkeldey, Stockmair & Schwanhäusser
(86) International application number: PCT/JP2011/076396
(87) International publication number: WO 2012/067145

(57) **Abstract**

The purpose of the present invention is to improve adhesion failure associated with "a bubble formation phenomenon" that may occur in an adhesive layer when the thickness of an adhesive agent is increased and "Cratering" which may be caused in the adhesive layer by contaminants or the like present on a material to be adhered.

The purpose can be achieved by a powdery adhesive agent comprising thermosetting adhesive particles and a surface control agent, wherein the powdery adhesive agent contains the surface control agent in an amount of 0.1-5.0 parts by mass relative to 100 parts by mass of the thermosetting adhesive agent particle and used for the adhesion between a metal plate and a porous material.

## Description

### TECHNICAL FIELD

The invention relates to an adhesive agent. More particularly, the invention relates to a powdery adhesive agent containing thermosetting adhesive particles, and an adhesion method and a manufacturing method of an adhered material using the powdery adhesive agent.

### BACKGROUND ART

Regarding a method for adhering a metal plate and a porous material, for example a pressure plate (metal plate) and a friction material (porous material) of a brake pad, a method has been known in which thermosetting adhesive particles are attached to the pressure plate with an electrostatic application method, the thermosetting adhesive particles are pre-cured and then the friction material is strongly stuck thereto (refer to Patent Document 1). According to this method, it is possible to strongly stick the friction material to the pressure plate without using a primer.

According to the above method, the adhesive agent having a particle shape, so-called powdery adhesive agent is used, so that a solvent is not required. Thereby, it is possible to prevent an environmental contamination and to reduce the time consumed to dry the adhesive agent. Since the above adhesion method of using the powdery adhesive agent exhibits a strong adhesive force, it is very appropriately applied to a brake pad for a vehicle.

Also, it has been known in a field of powdery paint that a surface control agent is used (refer to Patent Document 2). In the powdery paint, since an outward appearance is an important factor, the surface control agent is used.

### Prior Art Documents

### Patent Documents

Patent Document 1: JP-A-2000-088021
Patent Document 2: JP-A-2006-056950

### SUMMARY OF THE INVENTION

### PROBLEMS TO BE SOLVED

In the adhesion method using the powdery adhesive agent, as described in the above, the powdery adhesive agent is attached by the electrostatic application. When performing the electrostatic application, a corona charging gun or tribo charging gun is used. However, the adhesive agent is much attached to an edge part of a material to be adhered by a Faraday cage effect thereof, so that a film thickness of the adhesive agent tends to be increased at the edge part. The inventors found that when the thickness of the adhesive agent is increased, the air existing in a particle gap of the powdery adhesive agent or reaction gas generated due to a curing reaction is difficult to escape in a pre-curing process, so that a bubble formation phenomenon occurs and an adhesion failure is thus caused.

In addition, according to the above adhesion method, a defect called as "cratering" or "depression" is found in an adhesive agent layer after the pre-curing. The "cratering" is caused due to contaminants present on an adhesion surface of the pressure plate that is a material to be adhered and the like. Regarding this, the inventors found that when the "cratering" is much formed or a size of the "cratering" is large, it causes the adhesion failure.

When sticking the metal plate and the porous material, particularly, the pressure plate and the friction material of the brake pad, the adhesive agent is electrostatically applied and pre-cured and then the friction material is stuck thereto. When the friction material is stuck, an adhesion surface is not seen. Therefore, it has not been focused a surface state of the adhesive agent after the pre-curing in the field of the powdery adhesive agent.

When sticking the metal plate and the porous material, particularly, the pressure plate and the friction material of the brake pad, the strong adhesive force is required. Since the brake pad is used for braking a vehicle body of a vehicle having a weight of several tons, a large shear force is caused on the adhesion surface between the pressure plate and the friction material. Thus, a level of the adhesive force required for the powdery adhesive agent that is used for this utility is very high. Therefore, an additive agent that may deteriorate the adhesive force has not been actively added.

The invention has been made keeping in mind the above situations, and an object of the invention is to improve an adhesion failure that may be caused when a powdery adhesive agent is used.

### MEANS FOR SOLVING THE PROBLEMS

The inventors made an earnest examination so as to solve the above problems. As a result, the inventors found that a surface state of an adhesive agent after pre-curing may cause an adhesion failure, focused addition of an additive agent, which has not been made in the related art, so as to improve the adhesion failure, found that when a surface control agent is contained in addition to thermosetting adhesive particles, the adhesion failure can be improved and finally completed the invention. In addition, the inventors found that when the surface control agent is contained within a range not causing deterioration of an adhesive force, it is possible to improve the adhesion failure while keeping the adhesive force. That is, the invention has following configurations.

(1) A powdery adhesive agent which is used for adhesion between a metal plate and a porous material and includes: thermosetting adhesive particles; and a surface control agent, in which a contained amount of the surface control agent is 0.1 to 5.0 parts by mass relative to 100 parts by mass of the thermosetting adhesive particles.
(2) The powdery adhesive agent according to the above (1), in which the surface control agent is a leveling agent.
(3) The powdery adhesive agent according to the above (1), in which the surface control agent is a defoaming agent.
(4) A method of adhering a porous material to a metal plate, which includes: electrostatically applying the powdery adhesive agent according to one of the above (1) to (3) to a metal plate, and pre-curing the powdery adhesive agent; and pressurizing and heating a porous material on the pre-cured powdery adhesive agent.
(5) A method of manufacturing an adhered material of a metal plate and a porous material, which includes: electrostatically applying the powdery adhesive agent according to one of the above (1) to (3) to a metal plate, and pre-curing the powdery adhesive agent; and pressurizing and heating a porous material on the pre-cured powdery adhesive agent.

### EFFECTS OF THE INVENTION

The powdery adhesive agent of the invention can improve the adhesion failure that is caused when sticking the porous material to the metal plate. Hence, the adhesion reliability is enhanced.

### DESCRIPTION OF EMBODIMENTS

Here, the "part by weight" and the "part by mass" have the same meaning.

A powdery adhesive agent of the invention is a mixed or complex powdery adhesive agent containing thermosetting adhesive particles and a surface control agent.
As the thermosetting adhesive agent, a thermoplastic resin modified thermosetting adhesive agent and an elastomer modified thermosetting adhesive agent may be exemplified. The thermosetting adhesive agents may be used individually or in combination with two or more species thereof.

The thermoplastic resin modified thermosetting adhesive agent may include a polyvinyl butyral/phenolic, polyvinyl formal/phenolic, nylon/phenolic, polyvinyl acetate/phenolic, polyamide/epoxy, acryl/epoxy, polyester/epoxy and the like, for example.

The elastomer modified thermosetting adhesive agent may include NBR/phenolic, chloroprene/phenolic, silicon/phenolic, polyurethane/phenolic, NBR/epoxy, polyurethane/epoxy and the like, for example. As the phenolic resin, resol or novolac containing hexamethylenetetramine may be used.

The thermosetting adhesive particles that are used in the invention may be available in the market. It is sufficient that a volume mean diameter thereof is within a range within which the thermosetting adhesive particles are typically used as the powdery adhesive agent. For example, the thermosetting adhesive particles having a mean volume diameter of 15 to 45 µm may be preferably used.

The surface control agent that is contained in the powdery adhesive agent of the invention controls surface tension to thus function as a defoaming agent, a leveling agent, an anti-popping agent and the like. In the invention, the powdery adhesive agent contains the surface control agent, thereby improving an adhesion failure. Also, the surface control agent is contained in an amount of 0.1 to 5.0 parts by mass relative to 100 parts by mass of the powdery adhesive agent. In this range, it is possible to improve the adhesion failure while keeping the adhesive force.

The surface control agent is not particularly limited insomuch as it functions as a defoaming agent, a leveling agent, an anti-popping agent and the like, and may include an acryl-based surface control agent such as poly alkyl acrylate, poly alkyl methacrylate and the like, a vinyl-based surface control agent such as poly alkyl vinyl ether, poly butadiene and the like, a silicone-based surface control agent such as poly dimethyl siloxane, poly phenyl siloxane, organic modified poly siloxane, silicone fluoride and the like, a fluorine-based surface control agent such as fluorine-based surfactant, a fluorine-based polymer and the like, an aromatic-based organic compound such as benzoin, bisphenol A, acetoxybenzoic acid phenyl, bis phenoxy propanol compound, cyclohexanedimethanol dibenzoate and the like, and the like. Among them, the acryl-based surface control agent and the aromatic-based organic compound are preferable.

The preferable specific examples of the surface control agent functioning as the leveling agent may include "DISPARLON PL-545" (registered trademark) made by Kusumoto Chemicals, Ltd., "Acronal 4F" (registered trademark) made by BASF, and the like. The preferable specific examples of the surface control agent functioning as the defoaming agent may include benzoin, bisphenol A and the like.

The surface control agent that is added to the powdery adhesive agent of the invention is preferably contained in an amount of 0.5 to 4.0 parts by mass, more preferably 0.5 to 3.0 parts by mass relative to 100 parts by mass of the powdery adhesive agent not only when it functions as the defoaming agent but also when it functions as the leveling agent, from a standpoint that it is difficult to cause the deterioration of the adhesive force.

The surface control agent that is added to the powdery adhesive agent of the invention is preferably a powdery additive agent. When the powdery additive agent is used, it is not necessary to prepare a master batch that is required when using a liquid additive agent. Also, it is possible to uniformly distribute the powdery additive agent by a dry blend method.
Also, when the surface control agent is powdery, a volume mean diameter of the primary particles thereof is preferably 500 µm or less for melt kneading and 10 µm or less for dry blend, from a standpoint of sufficiently exhibiting the functions of the surface control agent. Also, preferably, a shape of the surface control agent is substantially spherical from a standpoint of the dispersion.

The method of manufacturing the powdery adhesive agent of the invention is not particularly limited and the powdery adhesive agent can be manufactured using a method of manufacturing a typical powdery adhesive agent. For example, the powdery adhesive agent can be manufactured by melt-kneading a thermoplastic resin modified thermosetting adhesive agent and a surface control agent, and a curing agent as required. Also, when the surface control agent is powdery, the powdery adhesive agent of the invention can be manufactured using a dry blend method other than the melt kneading.

The curing agent that is an arbitrary additive agent may include tertiary amines such as tri ethanol amine, demethyl-p-toluidine and the like and basic vulcanizing agents such as hexamethylenetetramine, n-butyl aldehyde-aniline condensate and the like. Also, when the curing agent is added, a contained amount thereof is not particularly limited insomuch as it does not deteriorate the effects of the invention.

When the powdery adhesive agent of the invention is manufactured using the melt kneading, a general kneader such as an open roll, a single screw extruder, a twin screw extruder, a multi screw extruder, specifically Banbury mixer or ko-kneader and the like may be used. The time and temperature of the melt kneading can be appropriately set by one skilled in the art, depending on types of the thermosetting adhesive agent that is used in the invention.

On the other hand, when the powdery adhesive agent of the invention is manufactured using the dry blend, a general blender such as a Henschel mixer, a super mixer, a high speed mixer and the like may be used. The time and temperature of the dry blend can be appropriately set by one skilled in the art, depending on types of the thermosetting adhesive agent that is used in the invention.

The powdery adhesive agent of the invention may be used as an adhesive agent for sticking a porous material to a metal plate. For example, the powdery adhesive agent of the invention may be applied to a method disclosed in JP-A-2000-088021. For instance, a method of electrostatically applying and pre-curing a powdery adhesive agent on a metal plate such as pressure plate and pressurizing and heating a porous material on the pre-cured powdery adhesive agent may be exemplified. As the electrostatic application method, a corona charging method or tribo charging method may be used.

The porous material that adheres to the metal plate may include a friction material, for example. In this case, as the porous material, a molded material may be used. Alternatively, a metal plate to be adhered is set in a mold and a raw material of the friction material is introduced, pressurized and heated in the mold and then molded on the metal plate.

### <Embodiments>

In the below, the invention is more specifically described with reference to embodiments. However, it should be noted that the invention is not limited to the embodiments.

### <Embodiment 1>

The straight phenolic resin (novolac) particles (volume mean diameter: 15 µm) 100 parts by mass as the thermosetting adhesive particles, the hexamethylenetetramine 10 parts by mass as the curing agent and DISPARLON PL-545 (made by Kusumoto Chemicals, Ltd.) 0.5 part by mass as the surface control agent, which is an acryl-based surface control agent, were melt-kneaded at 120°C by using a Ko-kneader, so that a complex body was obtained. The obtained complex body was cooled and pulverized, so that an adhesive agent 1 having a volume mean diameter of 35 µm was obtained.

### <Embodiments 2 and 3>

Adhesive agents 2 and 3 were obtained in the same manner as the embodiment 1, except that an addition amount of the surface control agent was changed to 1.0 part by mass and 3.0 parts by mass, respectively,

### <Comparative Example 1>

An adhesive agent 4 was obtained in the same manner as the embodiment 1, except that the surface control agent was not added.

### <Cratering Evaluation Test>

The adhesive agents 1 to 4 were electrostatically applied to pressure plates by using a corona gun (made by Asahi Sunac Corporation). The used pressure plate was surface-degreased, left uncontrolled outdoors for 8 hours, contaminated with dust in the atmosphere and then used for the electrostatic application.

The pressure plates on which the adhesive agents 1 to 4 were respectively electrostatically applied were pre-cured at 125°C for 30 minutes. All thicknesses of the adhesive agents after the pre-curing were 40 µm. The pressure plates on which the adhesive agents 1 to 4 were electrostatically applied and then pre-cured were evaluated with eyes as regards whether the cratering of the adhesive agent has occurred after the pre-curing. Results are shown in Table 1.

**<Table 1>**

| Table 1: Adhesive agent layers after pre-curing | | | | |
|---|---|---|---|---|
| | Embodiment 1 | Embodiment 2 | Embodiment 3 | Comparative Example 1 |
| contained amount of surface control agent | 0.5 | 1.0 | 3.0 | 0 |
| whether cratering has occurred | B | A | A | C |

| | | | | |
|---|---|---|---|---|
| A: the number of cratering per 1.0 cm² of adhesive agent layer surface that could be checked with eyes: 5 or less B: the number of cratering per 1.0 cm² of adhesive agent layer surface that could be checked with eyes: 6 to 10 C: the number of cratering per 1.0 cm² of adhesive agent layer surface that could be checked with eyes: 11 or more | | | | |

### <Shear Test>

The pressure plate after the pre-curing manufactured in the cratering evaluation test and a pre-molded product of a friction material, which was obtained by mixing and pre-molding raw materials shown in Table 2, were subject to the thermofoaming and after-curing, so that a friction material (brake pad) was manufactured.
A shear test was performed for the manufactured friction material. The shear test was performed on the basis of JIS D4422 (2007) and a shear strength and a matrix fracture area were measured at room temperature, 300°C and 350°C. Results are shown in Table 3.

**<Table 2>**

| Table 2: Mixing ratio of raw materials of friction material | |
|---|---|
| material names of raw materials | mixing ratio (parts by mass) |
| phenolic resin | 15 |
| aramid pulp | 10 |
| inorganic fiber | 15 |
| zirconium silicate | 3 |
| organic dust | 7 |
| barium sulfate | 45 |
| graphite | 5 |

**<Table 3>**

| Table 3: Results of shear test | | | | | | |
|---|---|---|---|---|---|---|
| | | | Embodiment 1 | Embodiment 2 | Embodiment 3 | Comparative example 1 |
| contained amount of surface control agent (parts by mass) | | | 0.5 | 1.0 | 3.0 | 0 |
| test temperature | Room Temp. | shear strength (MPa) | 9.1 | 9.0 | 9.1 | 9.0 |
| | | matrix fracture area (%) | 100 | 100 | 100 | 100 |
| | 300°C | shear strength (MPa) | 5.0 | 5.2 | 5.1 | 5.2 |
| | | matrix fracture area (%) | 100 | 100 | 100 | 100 |
| | 350 °C | shear strength (MPa) | 3.3 | 3.5 | 3.2 | 3.4 |
| | | matrix fracture area (%) | 86 | 87 | 89 | 80 |

While the cratering was much observed in the comparative example 1 in which the surface control agent was not added in Table 1, the cratering was less observed in the embodiments having the surface control agent added, compared to the comparative example.
In Table 3, the shear strength was equivalent at the respective test temperatures of the embodiments and comparative example. However, the matrix fracture area in the test of 350°C was high and favorable in the embodiments having the surface control agent added, compared to the comparative example. In particular, the fracture was seen at an interface between the pressure plate and the adhesive agent in the fracture shape of the comparative example,

### <Embodiment 4>

The straight phenolic resin (novolac) particles 100 parts by mass as the thermosetting adhesive particles, the hexamethylenetetramine 10 parts by mass as the curing agent and benzoin 0.1 part by mass as the surface control agent were melt-kneaded at 120°C by using the Ko-kneader, so that a complex body was obtained. The obtained complex body was cooled and pulverized, so that an adhesive agent 5 having a volume mean diameter of 35 µm was obtained.

### <Embodiments 5 and 6>

Adhesive agents 6 and 7 were obtained in the same manner as the embodiment 4, except that an addition amount of the surface control agent was changed to 0.5 part by mass and 2.0 parts by mass, respectively.

### <Bubble Formation Evaluation Test>

The adhesive agents 5 to 7 and the adhesive agent 4 were respectively electrostatically applied to the pressure plates by using the corona gun (made by Hosokawa Micron Wagner)
The pressure plates to which the adhesive agents 5 to 7 and the adhesive agent 4 were electrostatically applied were pre-cured at 145°C for 10 minutes. The electrostatic application was performed so that the thickness of the adhesive agent at this time became 40 µm, 60 µm, 80 µm and 120 µm, respectively.
The pressure plates on which the adhesive agents 5 to 7 and the adhesive agent 4 were electrostatically applied were evaluated with eyes as regards whether the bubble formation of the adhesive agent has occurred after the pre-curing. Results are shown in Table 4.

**<Table 4>**

| Table 4: Bubble formation of adhesive agent after pre-curing/ results observed with eyes | | | | | |
|---|---|---|---|---|---|
| | | Embodiment 4 | Embodiment 5 | Embodiment 6 | Comparative example 1 |
| contained amount of surface control agent (parts by mass) | | 0.1 | 0.5 | 2.0 | 0 |
| film thickness | 40 µm | A | A | A | A |
| | 60 µm | A | A | A | B |
| | 80 µm | A | A | A | C |
| | 120 µm | B | B | A | C |

| | | | | | |
|---|---|---|---|---|---|
| A: no bubble formation and favorable B: partial bubble formation at an edge part of the pressure plate C: bubble formation on an adhesion surface | | | | | |

### <Shear Test>

The pressure plate after the pre-curing manufactured in the bubble formation evaluation test and a pre-molded product of a friction material, which was obtained by mixing and pre-molding the raw materials shown in Table 2, were subject to the thermofoaming and after-curing, so that a friction material (brake pad) was manufactured.
A shear test was performed for the manufactured friction material. The shear test was performed on the basis of JIS D4422 (2007) and a shear strength and a matrix fracture area were measured at room temperature. Results are shown in Table 5.

**<Table 5>**

| Table 5: Results of shear test | | | | | | |
|---|---|---|---|---|---|---|
| | | | Embodiment 4 | Embodiment 5 | Embodiment 6 | Comparative example 1 |
| Contained amount of surface control agent (parts by mass) | | | 0.1 | 0.5 | 2.0 | 0 |
| film thickness | 40 µm | shear strength (MPa) | 9.0 | 8.9 | 9.2 | 9.0 |
| | | matrix fracture area (%) | 100 | 100 | 100 | 100 |
| | 60 µm | shear strength (MPa) | 9.1 | 9.0 | 9.1 | 9.1 |
| | | matrix fracture area (%) | 100 | 100 | 100 | 100 |
| | 80 µm | shear strength (MPa) | 8.9 | 9.1 | 9.0 | 8.9 |
| | | matrix fracture area (%) | 100 | 100 | 100 | 98 |
| | 120 µm | shear strength (MPa) | 9.0 | 9.1 | 9.1 | 8.6 |
| | | matrix fracture area (%) | 98 | 97 | 100 | 85 |

In Table 4, as regards the film thickness of 40 µm that is a condition of applying a typical adhesive agent, the bubble formation was not observed in the embodiments and the comparative example. Regarding the film thickness of 60 µm, the bubble formation was observed at an edge part of the comparative example 1 in which the surface control agent was not added. On the other hand, the embodiments 4 to 6 in which the surface control agent was added were favorable even at the film thickness of 60 µm, Also, regarding the film thickness of 80 µm, the bubble formation on the adhesion surface was observed in the comparative example 1. When the film thickness was 120 µm, the bubble formation was observed at the edge parts of the embodiments 4 and 5 in which the additive amount was smaller. However, the embodiment 6 was favorable.
In Table 5, the shear strength was substantially equivalent at the film thicknesses of the respective adhesive agents of the embodiments 4 to 6 and the comparative example 1. However, when the film thickness was 120 µm, the matrix fracture area was reduced in the comparative example 1 but the embodiments 4 to 6 to which the surface control agent was added were favorable. The reason that the matrix fracture area was reduced when the film thickness was 120 µm is that a bubble formation part of the adhesion surface became a defect of the adhesive layer. Since the bubble formation has not occurred in the embodiments, the matrix fracture was made, so that the value was favorable.

Although the invention has been specifically described with reference to the specific illustrative embodiments, it is apparent to one skilled in the art that a variety of changes and modifications can be made without departing from the spirit and scope of the invention.
This application is based on Japanese Patent Application No. 2010-259553 filed on November 19, 2010, the contents of which are incorporated herein by reference.

### INDUSTRIAL APPLICABILITY

The powdery adhesive agent of the invention can be used as the adhesive agent for the adhesion between the metal plate and the porous material, for example between the pressure plate and the friction material of the brake pad. Also, the powdery adhesive agent can be used as an adhesive agent of a shoe and a lining of a drum brake.

## Claims

1. A powdery adhesive agent used for adhesion between a metal plate and a porous material, the powdery adhesive agent comprising:
thermosetting adhesive particles; and
a surface control agent,
wherein a contained amount of the surface control agent is 0.1 to 5.0 parts by mass relative to 100 parts by mass of the thermosetting adhesive particles.

2. The powdery adhesive agent according to claim 1, wherein the surface control agent is a leveling agent.

3. The powdery adhesive agent according to claim 1, wherein the surface control agent is a defoaming agent.

4. A method of adhering a porous material to a metal plate, the method comprising:
electrostatically applying the powdery adhesive agent according to one of claims 1 to 3 to a metal plate, and pre-curing the powdery adhesive agent; and
pressurizing and heating a porous material on the pre-cured powdery adhesive agent.

5. A method of manufacturing an adhered material of a metal plate and a porous material, the method comprising:
electrostatically applying the powdery adhesive agent according to one of claims 1 to 3 to a metal plate, and pre-curing the powdery adhesive agent; and
pressurizing and heating a porous material on the pre-cured powdery adhesive agent.
